# EUROPÄISCHE PATENTSCHRIFT

(11) **EP 4 718 022 B1**
(45) Veröffentlichungstag und Bekanntmachung des Hinweises auf die Patenterteilung: **18.11.2026**
(21) Anmeldenummer: 25197538.9
(22) Anmeldetag: 22.08.2025
(51) Int. Cl.: G01B 11/24, C03B 3/00, C03B 5/24, F27D 21/00

(54) **VERFAHREN ZUR BESTIMMUNG DER TOPOGRAPHIE DER GEMENGEDECKE IN EINER VOLLELEKTRISCHEN GLASWANNE**
METHOD FOR DETERMINING THE TOPOGRAPHY OF THE MIXTURE COVER IN A FULLY ELECTRIC GLASS TANK
PROCÉDÉ DE DÉTERMINATION DE LA TOPOGRAPHIE DE LA COUVERTURE DE MÉLANGE DANS UNE CUVE DE VERRE ENTIÈREMENT ÉLECTRIQUE

(30) Priorität: 26.09.2024 DE 102024127950
(43) Veröffentlichungstag der Anmeldung: 01.04.2026
(73) Patentinhaber: SCHOTT AG, 55122 Mainz (DE)
(72) Erfinder: HAUF, Moritz, 55122 Mainz (DE); STOCK, Markus, 95666 Mitterteich (DE); ECKL, Jürgen, 95666 Mitterteich (DE); SCHADECK, Ulrich, 95666 Mitterteich (DE); EICHHOLZ, Rainer, 95666 Mitterteich (DE)
(74) Vertreter: Schott Corporate IP

(56) Entgegenhaltungen:
- JP-A- H0 656 432
- US-A- 4 194 077
- US-A1- 2011 272 866

## Beschreibung

Die vorliegende Erfindung betriff ein Verfahren zur Erfassung und Auswertung von Daten zur Gemengedecke und/oder der Glasschmelze insbesondere in einer vollelektrischen Cold-Top-Schmelzwanne zum Schmelzen von Glas, sowie die Verwendung des Verfahrens in einem Verfahren zur Herstellung von Glas.

### Technischer Hintergrund/ Stand der Technik

Zur Verringerung des CO₂-Ausstoßes in der Glasproduktion kommen zunehmend vollelektrische Schmelzwannen bei der Herstellung von Glas und Glaskeramik zum Einsatz.

In vollelektrischen Schmelzwannen ist üblicherweise die gesamte freie Oberfläche der Glasschmelze mit Gemenge bedeckt. Diese geschlossene Gemengedecke isoliert die Glasschmelze thermisch vom Oberofen, so dass die Oberflächentemperatur der Glasschmelze von ca. 1400°C bis 1650°C auf ca. 200°C bis 400°C abgesenkt wird. Dadurch werden zum einen die Einschmelzleistung maximiert und die Energieeffizienz der Schmelzwanne signifikant verbessert. Der deutlich kältere Oberofen verringert außerdem Risiken für im Oberofen vorhandene Vorrichtungen wie Einlegemaschine und Oberofenmaterialien bzw. senkt die Anforderungen hinsichtlich der thermischen Belastbarkeit an die Konstruktion des Oberofens.

Beim Betrieb von vollelektrischen Schmelzwannen werden daher in der Regel Maßnahmen zum Sicherstellen einer geschlossenen Gemengedecke über die gesamte Schmelzbadoberfläche getroffen. Dazu wird lokal die Dicke der Gemengedecke gemessen und die Gemengeeinlage entsprechend angepasst.

Es ist möglich, die Gemengedicke händisch durch Stochern mit einem Stab über die seitliche Einlegeöffnung punktuell (zeitlich sowie räumlich) zu bestimmen. Diese Messmethode ist bei eingeschalteter elektrischer Wannenheizung sowohl für Mensch als auch Prozess risikobehaftet und erfordert Personaleinsatz. Außerdem kann die Gemengedicke lediglich an einer Stelle lokal und nur relativ ungenau gemessen werden.

Da die Temperatur der Gemengedecke abhängig von der Dicke der Gemengedecke ist, kann die Dicke der Gemengedecke aus der gemessenen Temperatur bestimmt werden. WO 8002833 und US 3980460 beschreiben verfahrbare Einleger für Cold-Top-Wannen, bei denen ein IR-Sensor bzw. ein Wärmesensor die Temperatur der Gemengedecke misst. Sollte punktuell eine zu hohe Temperatur der Gemengedecke festgestellt werden, wird hier eine größere Mengen Gemenge auf die Gemengedecke aufgebracht.

Ferner gibt es im Stand der Technik Verfahren, um den Abstand zwischen Gemengedecke und Einleger zu messen und darüber die Höhe des Glasstands in der Schmelzwanne zu bestimmen und diesen durch Regeln der Einlegemenge konstant zu halten. Beispielsweise beschreiben US 4194077 und US 4302623 verfahrbare Einleger für eine Cold-Top-Wannen, an deren Ende zu diesem Zweck jeweils ein Ultraschallsensor zur Messung des Abstandes zur Gemengedecke montiert ist.

Weitergehende Erhebung von Daten zur Gemengedecke wurden im Stand der Technik bisher nicht als erforderlich für den Betrieb einer Schmelzwanne angesehen. Gleichzeitig besteht durch die zunehmende Bedeutung von elektrischen Schmelzwannen das Bedürfnis, den Betrieb solcher Schmelzwannen zu optimieren.

### Aufgabe der Erfindung

Somit bestand die Aufgabe der Erfindung in der Bereitstellung von Methoden, mit welchen der Betrieb einer vollelektrischen Schmelzwanne optimiert werden kann, und mit welchen insbesondere durch lokal und zeitlich angepasste Einlegeraten und optional lokal und zeitlich angepasste Einschmelzraten auf den Schmelzprozess und auf Schwankungen im Schmelzprozess reagiert werden kann, sowie in der Bereitstellung von stabilen und energieeffizienten Verfahren zur Glasherstellung.

### Kurzbeschreibung der Erfindung

Insbesondere betrifft die Erfindung ein Verfahren zur Erfassung und Auswertung von Daten zur Gemengedecke und ggf. zur Glasschmelze und ggf. zum Glasstand in vorzugsweise einer vollelektrischen Cold-Top-Schmelzwanne zum Schmelzen von Glas, umfassend die folgenden Schritte:
- Bereitstellen mindestens eines Sensors 160 zur berührungslosen Erfassung von Daten zur Gemengedecke 150 an zumindest dem Ende des Auslegers 120 einer Einlegemaschine, an welchem Gemenge auf die Glasschmelze aufgebracht wird,
- wiederholtes Erfassen und Speichern von (a) Daten zur Gemengedecke 150 während des Betriebs der Schmelzwanne 100 mit zumindest dem Sensor 160, wobei Daten von mindestens 10 verschiedenen Positionen, vorzugsweise mindestens 100 verschiedenen Positionen der Gemengedecke erfasst werden, und (2) jeweiliges Zuordnen der Daten zur Position des Endes des Auslegers 120 bzw. des Sensors 160,
- Verarbeiten der erfassten Daten und Erstellen einer Topographiekarte, vorzugsweise einer globalen Topographiekarte und/oder vorzugsweise einer optimalen Topographie der Gemengedecke 150.

Ferner betrifft die Erfindung die Verwendung des erfindungsgemäßen Bestimmungsverfahrens in einem Verfahren zur Herstellung von Glas zur Steuerung der Gemengeeinlage.

### Figurenbeschreibung

Figur 1 zeigt schematisch einen Querschnitt durch eine Cold-Top-Schmelzwanne zur Durchführung des erfindungsgemäßen Verfahrens.
Figur 2 zeigt schematisch eine Aufsicht auf einen Ausleger einer Einlegemaschine zur Durchführung des erfindungsgemäßen Verfahrens.
Figur 3 zeigt schematisch die Messung einer Gemengedecke bzw. eine daraus erstelle Topographie der Gemengedecke.
Figur 4 zeigt schematisch einen Querschnitt durch eine Cold-Top-Schmelzwanne zur Durchführung des erfindungsgemäßen Verfahrens mit einer zusätzlichen Mikrowellenheizung.

### Detaillierte Beschreibung der Erfindung

Die Erfindung betrifft ein Verfahren zur Erfassung und Auswertung von Daten zur Gemengedecke und/oder dem Glasstand insbesondere in einer vollelektrischen Cold-Top-Schmelzwanne zum Schmelzen von Glas und der Nutzung dieser Daten für einen optimierten Einschmelzprozess. Es werden dabei Daten bestimmt und verarbeitet, welche sowohl die räumliche als auch die zeitliche Veränderung der Gemengedicke betreffen und es kann eine Topographie der Gemengedecke erstellt werden.

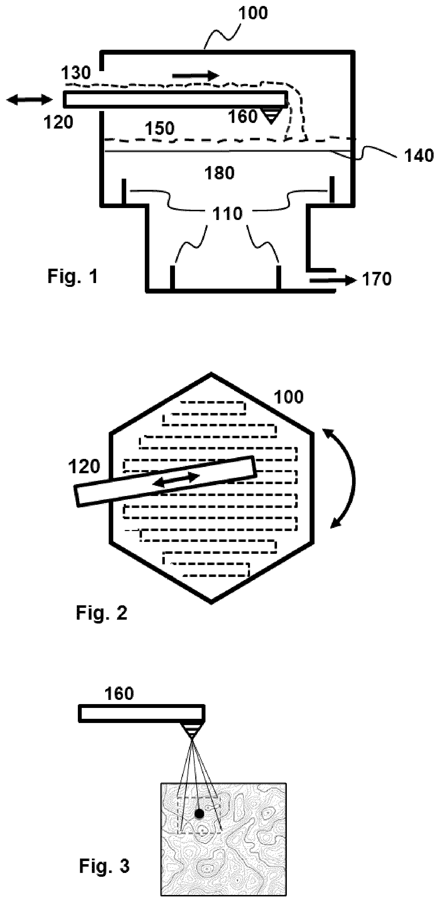

Unter dem Begriff "Topographie" wird hierbei eine Beschreibung bzw. Darstellung der dreidimensionalen Struktur der Gemengedeckenoberfläche verstanden (vgl. Fig. 3). Unter dem Begriff "globale Topographie" wird die sich im Laufe des Schmelzprozesses verändernde Topographie Gemengedeckenoberfläche verstanden. Unter dem Begriff "optimale Topographie" wird eine Topographie der Gemengedecke verstanden, welche mittels des erfindungsgemäßen Verfahrens bestimmt werden kann und welche für einen spezifischen Schmelzprozess den stabilsten Prozess und/oder die beste Glasqualität ermöglicht.

Es wurde im Rahmen dieser Erfindung erkannt, dass durch umfangreiche Erfassung und Auswertung von Daten zu Gemengedecke und Glasstand der Betrieb von vollelektrischen Cold-Top-Wannen verbessert und stabilisiert werden kann. Weiterhin kann durch das umfangreiche Erfassung und Auswertung von Daten zu Gemengedecke und Glasstand der Betrieb von vollelektrischen Cold-Top-Wannen überwacht werden und insbesondere können lokale Abschmelzrate ermittelt werden, wodurch Rückschlüsse auf die Strömung im Inneren der Wanne möglich sind.

So wurde beispielsweise festgestellt, dass die Topographie einer Gemengedecke Rückschlüsse auf Strömungen innerhalb der darunterliegenden Glasschmelze zulässt. Solche Strömungen können im laufenden Betrieb der Schmelzwanne nicht direkt gemessen werden, spielen aber eine große Rolle für die Energieeffizienz der Wanne, die Abnutzung von Wannenbauteilen und auch für die Qualität des Glases.

Beispielsweise kann es bedingt durch die Glasströmung des heißen Glases zu lokal unterschiedlichen Abschmelzraten oder bedingt durch eine Gasbildung im Einschmelzprozess zu "Vulkan"-Bildung, d.h. Ausströmen von freigesetzten Gasen aus der Schmelze, kommen. Solche Effekte verschlechtern die Energieeffizienz der Wanne und beeinflussen die Glasströmung, wodurch es wiederum zu schnellen Kurzschlusspfaden und damit schlechter Glasqualität kommen kann.

Durch Kenntnis der Gemengedeckentopographie kann auf solche Prozesse Einfluss genommen werden, indem die Gemengeeinlagemenge räumlich und zeitlich diesen Prozessen angepasst werden. Beispielsweise ist Folgendes möglich:
- In Bereichen mit höherer Abschmelzrate kann eine höhere Einlegerate eingestellt und in Bereichen mit niedriger Abschmelzrate eine niedrigere Einlegerate eingestellt werden.
- Durch eine optionale Mikrowellenheizung kann in Bereichen mit niedriger Abschmelzrate eine zusätzliche Umwandlung des Gemenges auf der Glasschmelze gezielt eingestellt bzw. durchgeführt werden. In Bereichen mit einer erhöhten bzw. hohen Einschmelzrate kann die optionale Mikrowellenheizung reduziert bzw. gänzlich ausgeschalten werden.
- Es kann ein vordefiniertes Dickenmuster (welches nicht überall gleich dick ist) zeitlich konstant gehalten werden, beispielsweise kann ein hexagonales Muster von dünnen Gemengedeckenstellen eingestellt werden, welche einen auf die Glasviskosität und Verdampfungsraten optimierten Abstand voneinander besitzen und durch welche freigesetztes Gas aus der Schmelze austreten kann.
- Es kann eine gefundene optimale Gemengedickentopographie zeitliches konstant gehalten werden.

Es wurde im Rahmen der Erfindung festgestellt, dass neben der räumlich definierten Dicke der Gemengedicke auch die zeitliche Konstanz der definierten lokalen Dicke der Gemengedecke für einen stabilen Prozess entscheidend ist.

Das erfindungsgemäße Verfahren sieht daher die berührungslose Erfassung von Daten zur gesamten Gemengedecke und/oder dem Glasstand und/oder der Glasschmelze insbesondere in einer vollelektrischen Cold-Top-Schmelzwanne vor. Die ermittelten Daten werden ausgewertet und es wird eine Topographiekarte und vorzugsweise eine globale Topographiekarte und/oder optimale Topographie der Gemengedecke erstellt. Die Daten bzw. die Topographiekarte werden während des Betriebs der Wanne in regelmäßigen zeitlichen Abständen erfasst und die zeitlichen Veränderungen der Topographie ausgewertet und eine globale Topographie erstellt. Ferner wird eine für den jeweiligen Schmelzprozess optimale Topographie der Gemengedecke ermittelt und diese zur Regelung der lokalen Einlegemenge verwendet.

Unter einer Cold-Top-Schmelzwanne wird eine kontinuierlich arbeitende Schmelzwanne für Glas verstanden, bei der im laufenden Betrieb keine Beheizung des Gemenges vom Oberofen der Wanne aus erfolgt. Dies bedeutet, dass keine Beheizung des Gemenges mittels Brenner oder anderweitiger Heizquelle erfolgt, die von oben auf das Gemenge auf der Schmelze wirkt. Optional kann allerdings durch eine Mikrowellenheizung (190), das Gemenge auf der Schmelze lokal beim Einschmelzen unterstützt werden und so in eine Glasschmelze umgewandelt werden. Die Freisetzung der Mikrowellenleistung passiert allerdings nicht von "oben", also an der Grenzschicht zwischen Gemenge und Luft/Gas, sondern von "unten", also an der Grenzschicht zwischen Gemenge und Glasschmelze.

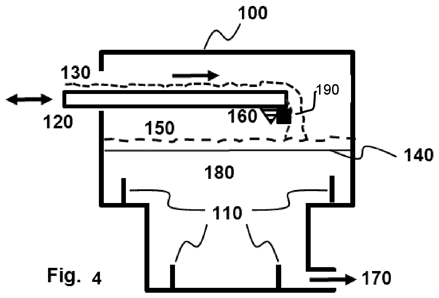

Ein schematischer Schnitt durch eine solche Cold-Top-Schmelzwanne 100 ist in Figur 1 und Figur 4 gezeigt. Die Energie zum Schmelzen des Gemenges 150 und Erwärmen der Glasschmelze 180 wird in Figur 1 ausschließlich durch Elektroden 110 in die Glasschmelze 180 eingebracht. Die Energie zum Schmelzen des Gemenges 150 und Erwärmen der Glasschmelze 180 wird in Figur 4 durch Elektroden 110 und eine Mikrowellenheizung 190 in die Glasschmelze 180 eingebracht.

Das einzulegende Gemenge 130 wird über den Ausleger 120 einer Einlegemaschine auf die Oberfläche der Glasschmelze 140 aufgebracht. Um die eingebrachte Wärme effizient zu nutzen, bildet das auf die Oberfläche der Glasschmelze 140 eingelegte Gemenge einen durchgehenden Gemengeteppich 150. Der Ausleger 120 der Einlegemaschine kann, wie beispielsweise in Figur 2 gezeigt, im Wesentlichen die ganze Oberfläche der Glasschmelze 140 abfahren und einzulegendes Gemenge 130 auf die Oberfläche der Glasschmelze 140 bzw. eine bestehende Gemengedecke 150 aufbringen.

Zumindest am Ende des Auslegers 120 einer Einlegemaschine ist zumindest ein Sensor 160 zur berührungslosen Vermessung der Gemengedecke und/oder des Glasstands angebracht.

Es kann dazu mindestens ein Sensor zur Erfassung von punktuellen Daten verwendet werden, wobei ein solcher Sensor zur Erfassung von punktuellen Daten ausgewählt sein kann aus der Gruppe bestehend aus Radarsensoren, Ultraschallsensoren, Lasertriangulationssensoren, Laser (Time-of-Flight)-Sensoren oder Kombinationen daraus. Die mittels eines solchen Sensors erhaltenen punktuellen Messwerte können direkt zur Erstellung der Topographiekarte verwendet werden.

Es kann ferner zusätzlich oder an Stelle von einem oder mehreren punktuellen Sensoren mindestens ein Sensor zur Abstandserfassung von Flächen verwendet werden. Ein solcher Sensor zur Erfassung von Flächen kann ausgewählt sein aus der Gruppe bestehend beispielsweise aus Laserscannern, einer 3D-Kamera (Time-of-Flight, LIDAR), Lasertriangulation mit Linienmuster, einer IR-Kamera, ein Photogrammetriesensor oder Kombinationen daraus. Die erhaltenen Flächendaten können direkt oder durch Zusammenfügen von sich überlappenden Teilflächendaten zur Erstellung der Topographiekarte verwendet werden.

Es können auch Kombinationen von mindestens einen Sensor zur Erfassung von punktuellen Daten und mindestens einem Sensor zur Erfassung von Flächendaten verwendet werden und die erhaltenen Daten zur Erstellung der Topographiekarte verwendet werden.

Gemäß einer Ausführungsform der Erfindung können eine oder mehrere Sensoren in einem Wasser- und/oder Luft-gekühltem Gehäuse eingehaust sein.

Die Sensordaten können während des Gemengeeinlegevorgangs erfasst werden. Alternativ oder zusätzlich kann ein Ausleger 120 kann auch ohne Einlegen von Gemenge die Oberfläche der Glasschmelze 180 abfahren, um nur Messdaten mittels eines beispielsweise am Ende des Auslegers 120 angebrachten Sensors 160 aufzunehmen.

Die erhaltenen Messdaten werden zusammen mit der jeweiligen Position des Auslegers 120 verarbeitet und es wird vorzugsweise eine Topographie der Gemengedecke erstellt (vgl. Fig. 3). Eine solche Topographie wird in regelmäßigen Abständen bestimmt und die Veränderung der Topographie zur Bestimmung einer optimalen Gemengedeckentopographie verwendet. Im laufenden Betrieb wird die jeweils bestimmte Topographie mit der spezifizierten optimalen Gemengedeckentopographie verglichen und die für jede Position optimale Einlagemenge des Gemenges bestimmt und aufgebracht. Ferner können Abweichungen von der Entwicklung der Gemengedeckentopographie dazu verwendet werden, Probleme in der Prozessführung der Schmelzwanne frühzeitig festzustellen.

Gemäß einer Ausführungsform der Erfindung kann mindestens eine Mikrowellenheizung bereitgestellt werden. Diese mindestens eine Mikrowellenheizung kann Energie in Form von Mikrowellenstrahlung erzeugen, wobei die erzeugte Mikrowellenstrahlung zumindest einen Teil des Übergangs zwischen Gemenge und Rauschmelze erfasst. Rauschmelze ist ein Fachbegriff aus der Glastechnologie und bezeichnet die Schmelze vor der Läuterung. Es ist die erste schmelzflüssige Phase, in der alle Rohstoffe in den flüssigen Zustand übergegangen sind, aber noch Blasen enthalten.

Die Mikrowellenstrahlung koppelt in den oberen Bereich direkt unter der Gemengedecke, somit in die Einschmelzreaktionszone, ein und erhöht hier die Temperatur und beschleunigt das Abschmelzen, insbesondere gegenüber oder im Vergleich zu einem ansonsten gleichen Verfahren ohne Verwendung von Mikrowellenstrahlung. Vorteil hiervon ist, dass die Gemengedecke lokal und zielgerichtet verringert werden kann, insbesondere in Kaltzonen, in der die Gemengedecke weniger schnell schmilzt oder in Zonen, an denen mehr Gemenge aufgebracht wurde.

Vorzugsweise ist die mindestens eine Mikrowellenheizung an zumindest dem Ende des Auslegers 120 einer Einlegemaschine, an welchem Gemenge auf die Glasschmelze aufgebracht wird angebracht. Dadurch kann die mindestens eine Mikrowellenheizung über die gesamte Oberfläche der Gemengedecke bewegt werden, wodurch es möglich ist lokale Bereiche effizient und zielgerichtet zu bestrahlen.

Gemäß einer bevorzugten Ausführungsform erzeugt die Mikrowellenheizung eine Mikrowellenstrahlung mit einer Frequenz von höher als 500 MHz und niedriger als 6 GHz, insbesondere niedriger als 3 GHz, vorzugsweise niedriger als oder gleich 2,45 GHz oder niedriger als oder gleich 915 MHz. Mikrowellenheizungen und Aufschmelzen von Gemenge mittels Mikrowellenstrahlen ist dem Fachmann bekannt, z.B. aus der WO2021/175506 A1.

Ferner betrifft die Erfindung die Verwendung des erfindungsgemäßen Bestimmungsverfahrens in einem Verfahren zur Herstellung von Glas zur Steuerung der Gemengeeinlage.

Ferner betrifft die Erfindung die Verwendung des erfindungsgemäßen Bestimmungsverfahrens in einem Verfahren zur Herstellung von Glas zur Steuerung von mindestens einer Mikrowellenheizung.

So kann auf durch die Glasströmung des heißen Glases sowie Gasbildung im Einschmelzprozess bedingte, lokal unterschiedliche Abschmelzraten sowie "Vulkan"-Bildung vermieden werden und die Energieeffizienz der Wanne verbessert werden.

Es ist auch möglich, durch die Steuerung der lokalen Dicke der Gemengedecke die Glasströmung zu beeinflussen und Kurzschlusspfade in der Glasschmelze zu vermeiden, wodurch die Glasqualität verbessert werden kann.

Darüber hinaus können die durch das erfindungsgemäße Verfahren erfassten und verarbeiteten Daten in Kombination mit künstlicher Intelligenz auch beispielsweise zur Detektion von Anomalien im Schmelzprozess verwendet werden. So können ungewöhnliche und damit potenziell kritische Zustände in der Glasschmelze erkannt werden und es kann vor prozesskritischen Situationen frühzeitig gewarnt werden.

### Bezugszeichenliste

- 100: Cold-Top-Schmelzwanne
- 110: Elektroden
- 120: Gemengeeinleger
- 130: Gemenge auf Transportband des Gemengeeinlegers
- 140: Oberfläche Glasschmelze
- 150: Gemengedecke
- 160: Sensor
- 170: Auslass
- 180: Glasschmelze
- 190: Mikrowellenheizung

## Patentansprüche

1. Verfahren zur Erfassung und Auswertung von Daten zur Gemengedecke und ggf. zur Glasschmelze und ggf. zum Glasstand in vorzugsweise einer vollelektrischen Cold-Top-Schmelzwanne zum Schmelzen von Glas, umfassend die folgenden Schritte:
- Bereitstellen mindestens eines Sensors (160) zur berührungslosen Erfassung von Daten zur Gemengedecke (150) an zumindest dem Ende des Auslegers (120) einer Einlegemaschine, an welchem Gemenge auf die Glasschmelze aufgebracht wird,
- wiederholtes Erfassen und Speichern von (a) Daten zur Gemengedecke (150) während des Betriebs der Schmelzwanne (100) mit zumindest dem Sensor (160), wobei Daten von mindestens 10 verschiedenen Positionen, vorzugsweise mindestens 100 verschiedenen Positionen der Gemengedecke erfasst werden, und (2) jeweiliges Zuordnen der Daten zur Position des Endes des Auslegers (120) bzw. des Sensors (160),
- Verarbeiten der erfassten Daten und Erstellen einer Topographiekarte, vorzugsweise einer globalen Topographiekarte und/oder vorzugsweise einer optimalen Topographie der Gemengedecke (150).

2. Verfahren nach Anspruch 1, wobei mindestens ein Sensor (160) zur Erfassung von punktuellen Daten verwendet wird und der Sensor (160) ausgewählt ist aus der Gruppe bestehend aus Radar, Ultraschall, Lasertriangulation, Laser (Time-of-Flight, LIDAR) oder Kombinationen daraus und/oder die erhaltenen punktuellen Messwerte direkt zur Erstellung der Topographiekarte verwendet werden.

3. Verfahren nach Anspruch 1, wobei ein Sensor (160) zur Erfassung von Flächen verwendet wird und der Sensor (160) ausgewählt wird aus der Gruppe bestehend aus Laserscanner, 3D-Kamera (Time-of-Flight, LIDAR), Lasertriangulation mit Linienmuster, IR-Kamera, Photogrammetrie oder Kombinationen daraus und/oder wobei die erhaltenen Flächendaten direkt oder durch Zusammenfügen von sich überlappenden Teilflächendaten zur Erstellung der Topographiekarte verwendet werden.

4. Verfahren nach einem der vorangehenden Ansprüche, wobei mindestens ein Sensor zur Erfassung von punktuellen Daten und ein Sensor zur Erfassung von Flächendaten verwendet werden und die Daten zur Erstellung der Topographiekarte verwendet werden.

5. Verfahren nach einem der vorangehenden Ansprüche, wobei die Daten während des Gemengeeinlegevorgangs erfasst werden und/oder wobei die Daten ohne gleichzeitige Gemengeeinlage erfasst werden.

6. Verfahren nach einem der vorangehenden Ansprüche, wobei ferner Daten zum Glasstands und/oder Daten zur Glasschmelze erfasst und verarbeitet werden.

7. Verfahren nach einem der vorangehenden Ansprüche, wobei einer oder mehrere Sensoren in einem Wasser- und/oder Luft-gekühltem Gehäuse eingehaust sind.

8. Verfahren nach einem der vorangehenden Ansprüche, wobei mindestens eine Mikrowellenheizung bereitgestellt wird.

9. Verfahren nach Anspruch 8, wobei die mindestens eine Mikrowellenheizung an zumindest dem Ende des Auslegers (120) einer Einlegemaschine, an welchem Gemenge auf die Glasschmelze aufgebracht wird, angebracht wird.

10. Verwendung eines Verfahrens zur Bestimmung nach einem der Ansprüche 1 bis 9 in einem Verfahren zur Herstellung von Glas zur Steuerung der Gemengeeinlage.

11. Verwendung eines Verfahrens zur Bestimmung nach Anspruch 8 oder 9 in einem Verfahren zur Herstellung von Glas zur Steuerung der mindestens einen Mikrowellenheizung.

12. Verwendung nach Anspruch 10 oder 11, wobei lokal kleinere und/oder größere Gemengedicken eingestellt werden.

13. Verwendung nach Anspruch 10 oder 11 oder 12, wobei eine durch ein Verfahren nach einem der Ansprüche 1 bis 9 bestimmte optimale Topographie der Gemengedecke eingestellt wird.

## Claims

1. Method for capturing and evaluating data relating to the batch blanket and optionally relating to the glass melt and optionally relating to the glass level in preferably a fully electric cold-top melting tank for melting glass, comprising the following steps:
- providing at least one sensor (160) for contactlessly capturing data relating to the batch blanket (150) at at least that end of the boom (120) of a charging machine at which the batch is applied to the glass melt,
- repeatedly capturing and storing (a) data relating to the batch blanket (150) during operation of the melting tank (100) using at least the sensor (160), wherein data are captured from at least 10 different positions, preferably at least 100 different positions, of the batch blanket, and (2) respectively assigning the data to the position of the end of the boom (120) or of the sensor (160),
- processing the captured data and creating a topography map, preferably a global topography map and/or preferably an optimal topography of the batch blanket (150).

2. Method according to Claim 1, wherein at least one sensor (160) is used to capture point data and the sensor (160) is selected from the group consisting of radar, ultrasound, laser triangulation, laser (time-of-flight, LIDAR) or combinations thereof and/or the point measured values obtained are used directly to create the topography map.

3. Method according to Claim 1, wherein a sensor (160) is used to capture areas and the sensor (160) is selected from the group consisting of laser scanner, 3D camera (time-of-flight, LIDAR), laser triangulation with a line pattern, IR camera, photogrammetry or combinations thereof, and/or wherein the area data obtained are used to create the topography map directly or by combining overlapping subarea data.

4. Method according to one of the preceding claims, wherein at least one sensor is used to capture point data and one sensor is used to capture area data and the data are used to create the topography map.

5. Method according to one of the preceding claims, wherein the data are captured during the batch charging process, and/or wherein the data are captured without simultaneous batch charging.

6. Method according to one of the preceding claims, wherein data relating to the glass level and/or data relating to the glass melt are also captured and processed.

7. Method according to one of the preceding claims, wherein one or more sensors are housed in a water-cooled and/or air-cooled housing.

8. Method according to one of the preceding claims, wherein at least one microwave heater is provided.

9. Method according to Claim 8, wherein the at least one microwave heater is attached to at least that end of the boom (120) of a charging machine at which the batch is applied to the glass melt.

10. Use of a determination method according to one of Claims 1 to 9 in a method for producing glass, for controlling the batch charging.

11. Use of a determination method according to Claim 8 or 9 in a method for producing glass, for controlling the at least one microwave heater.

12. Use according to Claim 10 or 11, wherein locally smaller and/or larger batch thicknesses are established.

13. Use according to Claim 10 or 11 or 12, wherein an optimal topography of the batch blanket, as determined by a method according to one of Claims 1 to 9, is established.

## Revendications

1. Procédé de détection et d'évaluation de données sur la couverture de composition et éventuellement sur le verre fondu et éventuellement sur le niveau de verre dans de préférence un bassin de fusion à voûte froide entièrement électrique pour la fusion de verre, comprenant les étapes suivantes:
- fourniture d'au moins un capteur (160) pour détecter sans contact des données sur la couverture de composition (150) sur moins l'extrémité de la flèche (120) d'une machine d'enfournement, sur laquelle la composition est appliquée sur le verre fondu,
- détection et stockage répétés de (a) données sur la couverture de composition (150) pendant le fonctionnement du bassin de fusion (100) avec au moins le capteur (160), des données provenant d'au moins 10 positions différentes, de préférence d'au moins 100 positions différentes de la couverture de composition étant détectées, et (2) association respective des données à la position de l'extrémité de la flèche (120) ou du capteur (160),
- traitement des données détectées et création d'une carte topographique, de préférence d'une carte topographique globale et/ou de préférence d'une topographie optimale de la couverture de composition (150).

2. Procédé selon la revendication 1, au moins un capteur (160) étant utilisé pour la détection de données ponctuelles et le capteur (160) étant sélectionné dans le groupe constitué de radar, d'ultrasons, de triangulation laser, de laser (temps de vol, LIDAR) ou de combinaisons de ceux-ci et/ou les valeurs de mesure ponctuelles obtenues étant utilisées directement pour la création de la carte topographique.

3. Procédé selon la revendication 1, un capteur (160) étant utilisé pour détecter des surfaces et le capteur (160) étant sélectionné dans le groupe constitué d'un scanner laser, de caméra 3D (temps de vol, LIDAR), de triangulation laser avec motif de ligne, d'une caméra IR, de photogrammétrie ou de combinaisons de ceux-ci et/ou les données de surface obtenues étant utilisées directement ou par fusion de données de surfaces partielles se chevauchant pour créer la carte topographique.

4. Procédé selon l'une des revendications précédentes, au moins un capteur étant utilisé pour détecter des données ponctuelles et un capteur étant utilisé pour détecter des données de surface et les données étant utilisées pour créer la carte topographique.

5. Procédé selon l'une des revendications précédentes, les données étant détectées pendant le processus d'enfournement de composition et/ou les données étant détectées sans enfournement simultané de compositions.

6. Procédé selon l'une des revendications précédentes, des données sur le niveau de verre et/ou des données sur le verre fondu étant en outre détectées et traitées.

7. Procédé selon l'une des revendications précédentes, un ou plusieurs capteurs étant enfermés dans un boîtier refroidi par eau et/ou par air.

8. Procédé selon l'une des revendications précédentes, au moins un dispositif de chauffage à micro-ondes étant prévu.

9. Procédé selon la revendication 8, l'au moins un dispositif de chauffage à micro-ondes étant installé sur au moins l'extrémité de la flèche (120) d'une machine d'enfournement, sur laquelle une composition est appliquée sur le verre fondu.

10. Utilisation d'un procédé de détermination selon l'une des revendications 1 à 9 dans un procédé de fabrication de verre pour commander l'enfournement de composition.

11. Utilisation d'un procédé de détermination selon la revendication 8 ou 9 dans un procédé de fabrication de verre pour commander l'au moins un dispositif de chauffage à micro-ondes.

12. Utilisation selon la revendication 10 ou 11, des épaisseurs de composition localement plus petites et/ou plus grandes étant réglées.

13. Utilisation selon la revendication 10 ou 11 ou 12, une topographie optimale de la couverture de composition déterminée par un procédé selon l'une des revendications 1 à 9 étant réglée.
